(19) Europäisches Patentamt
European Patent Office
Office européen des brevets

(11) **EP 3 006 477 A1**

(12) **EUROPEAN PATENT APPLICATION**
published in accordance with Art. 153(4) EPC

(43) Date of publication:
**13.04.2016 Bulletin 2016/15**

(21) Application number: **14808251.4**

(22) Date of filing: **23.05.2014**

(51) Int Cl.:
*C08G 2/04* (2006.01)    *C08G 2/06* (2006.01)
*C08G 2/10* (2006.01)

(86) International application number:
**PCT/JP2014/063731**

(87) International publication number:
**WO 2014/196385 (11.12.2014 Gazette 2014/50)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **03.06.2013 JP 2013116900**

(71) Applicant: **Mitsubishi Gas Chemical Company,
Inc.
Tokyo 100-8324 (JP)**

(72) Inventors:
• **HIRANO, Tomoyuki
Hiratsuka-shi
Kanagawa 254-0016 (JP)**
• **ITO, Akira
Yokkaichi-shi
Mie 510-0886 (JP)**

(74) Representative: **Müller-Boré & Partner
Patentanwälte PartG mbB
Friedenheimer Brücke 21
80639 München (DE)**

(54) **PRODUCTION METHOD FOR OXYMETHYLENE COPOLYMER**

(57)    A method for the continuous production, at high polymerization yield, of an oxymethylene copolymer having improved thermal stability and formaldehyde emission, while maintaining toughness and rigidity, is provided. Provided is a production method for oxymethylene copolymer, including: a step of carrying out a copolymerization reaction of trioxane and 1,3-dioxolane in an amount of 0.9-2.4 mass% with respect to the trioxane, in the presence of 0.001-0.007 mol% of boron trifluoride and 0.006-2.0 mass% of a sterically hindered phenol with respect to the trioxane; and a step of adding a polymerization terminator to the reaction system at the point in time that the polymerization yield of the copolymerization reaction has reached 92% or above, to terminate polymerization.

EP 3 006 477 A1

**Description**

TECHNICAL FIELD

The present invention relates to a process for producing a stable oxymethylene copolymer.

BACKGROUND ART

Oxymethylene copolymers are superior in such properties as mechanical properties, thermal properties, electrical properties, sliding properties and formability, and have widely been used as structural materials, machine parts and the like in such products as electrical devices, automobile parts and precision machinery parts.

In recent years, the applications in which the copolymers are used have expanded. This has led to increasing demands that the resin performance be further enhanced and the cost be reduced. An important challenge in achieving the desired quality is the occurrence of forming failures such as defective appearances and size defects due to the pyrolysis of the oxymethylene copolymers during the forming processing in forming apparatuses with the consequent emission of formaldehyde. Further, it has been pointed out that the release of formaldehyde from final products would adversely affect the human health by causing a sick house syndrome and the like. The Ministry of Health, Labour and Welfare of Japan addresses the sick house syndromes by restricting the guideline value of indoor formaldehyde concentration to 0.08 ppm. Thus, there have been demands for oxymethylene copolymers with a minimized amount of formaldehyde emission while maintaining desirable rigidity and toughness required for final products. Various processes have been proposed for the production of oxymethylene copolymers having a reduced amount of formaldehyde emission. For example, there have been disclosed a process, in which monomers having reduced contents of impurities are polymerized and the system is rapidly cooled immediately after the polymerization to deactivate the catalyst, so as to restrain side reactions; a process, in which molecular ends are stabilized by directly adding water or the like to an extruder; and a process, in which monomers including a sterically hindered phenol are polymerized, the particle diameter of the oxymethylene copolymer obtained by the polymerization is controlled to an optimum size, the catalyst is deactivated, and water is added, and the resin in a molten state is deaerated under reduced pressure to stabilize the molecular ends.

Although oxymethylene copolymer production processes capable of achieving a high polymerization yield, in particular a polymerization yield of 95% or more, are advantageous in terms of productivity and economic efficiency, large amounts of thermally unstable structures are produced during the polymerization. Consequently, the obtained copolymers are poor in thermal stability and generate a large amount of formaldehyde in the forming apparatus.

There is disclosed a technique, in which oxymethylene copolymers are produced from raw materials including trioxane, 1,3-dioxolane and boron trifluoride that are producible at low cost in industry and are easy to handle, while reducing the occurrence of unstable moieties (see, for example, Patent Literature 1). This technique is advantageous in that the cost for recovering the monomers may be saved, because the polymerization yield is high and washing after the termination of the polymerization may be omitted.

However, this production process produces a larger amount of heat-labile and hydrolysis-labile moieties including formate ester structures along with the increase of polymerization yield. Consequently, an increase in polymerization yield is accompanied by an increase in the amount of labile moieties, and results in adverse effects on polymer quality such as the emission of formaldehyde from final products. Thus, the process could not be said to be satisfactory.

There is known a technique, in which a sterically hindered phenol having a molecular weight of 350 or more is added to a copolymerizable monomer in an amount of 0.001 to 2.0 % by mass relative to the total monomer before conducting the copolymerization of trioxane and the comonomer in the presence of a cationic active catalyst (see, for example, Patent Literature 2). Specifically, Patent Literature 2 discloses a technique that improves the alkali decomposition rate and the thermal weight loss by conducting the copolymerization of trioxane and 1,3-dioxolane using a boron trifluoride-ether complex as a catalyst in the presence of a sterically hindered phenol.

There is also a known technique, in which a sterically hindered phenol having a molecular weight of 350 or more has been incorporated into the 1,3-dioxolane in the copolymerization of trioxane and 1,3-dioxolane using a boron trifluoride-ether complex as a catalyst (see, for example, Patent Literatures 3 and 4). However, the polymerization yield obtained by these techniques is 85% or less. Moreover, the techniques involve washing as soon as the polymerization is terminated, and thus entail large amounts of energy for the recovery of unreacted monomers and are hence disadvantageous in economic efficiency. Furthermore, these literatures did not ascertain whether the oxymethylene copolymers maintain required level of rigidity and toughness, even after the thermal stability and odor have been improved.

On the other hand, as oxymethylene copolymers having high rigidity, there is disclosed an oxymethylene copolymer having high rigidity with a structure, in which oxyalkylene comonomer units are randomly inserted between the oxymethylene monomer units that constitute the polymer chains, in a ratio of 0.01 to 1.0 mole relative to 100 moles of the oxymethylene monomer units (see, for example, Patent Literature 5). Although the articles from the polymers exhibit high rigidity, its thermal stability is so decreased that the balance between the mechanical properties and the thermal stability is unsatisfactory.

Meanwhile, it has been reported that oxymethylene copolymers with balanced toughness and rigidity may be obtained in a high yield by controlling the ratio of the amount of 1,3-dioxolane to the amount of a catalyst within a specific range (see, for example, Patent Literature 6). However, the thermal stability has to be further improved, and the literature is quite silent with respect to the formaldehyde emissions.

PRIOR ART REFERENCES

Patent Literature

Patent Literature 1: JP H8-325341 A
Patent Literature 2: JP H3-63965 B
Patent Literature 3: JP H7-242652 A
Patent Literature 4: JP H11-269165 A
Patent Literature 5: WO 98/29483 A1
Patent Literature 6: JP 2001-329032 A

SUMMARY OF THE INVENTION

Technical Problem

In light of the circumstances discussed above, an object of the present invention is to provide a process for producing in a high yield an oxymethylene copolymer having improved thermal stability and formaldehyde emissions while maintaining excellent rigidity and toughness.

Solution to Problem

The present inventors carried out extensive studies to achieve the above object. As a result, they have found that the object may be accomplished by producing an oxymethylene copolymer by copolymerizing raw material monomers including trioxane and 1,3-dioxolane with boron trifluoride as a catalyst in such a manner that the trioxane is copolymerized with a specific amount of the 1,3-dioxolane in the presence of a specific amount of a sterically hindered phenol to give an oxymethylene copolymer and the polymerization is terminated at a polymerization yield of 92% or more by bringing the produced copolymer into contact with a polymerization terminator. The present invention has been completed based on the finding.

Specifically, the present invention provides the following production process:

A process for producing an oxymethylene copolymer comprising the steps of:

performing copolymerization reaction of raw material monomers including trioxane and 0.9 to 2.4 % by mass of 1,3-dioxolane relative to the trioxane in the presence of 0.001 to 0.007 % by mole of boron trifluoride relative to the trioxane and 0.006 to 2.0 % by mass of a sterically hindered phenol relative to the trioxane; and terminating the copolymerization by adding a polymerization terminator to the reaction system at a point in time when the copolymerization reaction gives a polymerization yield of 92% or more.

Advantageous Effects of Invention

The process for producing an oxymethylene copolymer according to the present invention permits production of an oxymethylene copolymer which exhibits high thermal stability and generates a reduced amount of formaldehyde while maintaining excellent rigidity and toughness in a high yield. Thus, it has a great significance in industry.

Description of Embodiments

The process for producing an oxymethylene copolymer according to the present invention is characterized in that raw material monomers containing trioxane and a specific amount of 1,3-dioxolane are copolymerized in the presence of a specific amount of boron trifluoride and a specific amount of a sterically hindered phenol, and that the copolymerization is terminated by bringing the produced copolymer into contact with a polymerization terminator when the copolymerization reaction gives a polymerization yield of 92% or more. The present application will be described in detail hereinbelow.

The trioxane (1,3,5-trioxane) used as a monomer in the present invention is a cyclic trimer of formaldehyde. It is commercially available or can be prepared by any production process known to a person skilled in the art, and the process is not particularly limited. Usually an amine in incorporated into the trioxane as a stabilizer in an amount of 0.00001 to 0.003 mmol, preferably 0.00001 to 0.0005 mmol, and more preferably 0.00001 to 0.0003 mmol per 1 mol of the trioxane. When the amine content is larger than the upper limit, adverse effects such as catalyst deactivation may be caused. When the amine content is smaller than the lower limit, problems such as the generation of paraformaldehyde may be encountered during the storage of the trioxane.

Examples of the amines to be incorporated into the trioxane in the present invention include primary amines, secondary amines, tertiary amines, amine compounds having an alcoholic hydroxyl group in the molecule, alkylated melamines and hindered amine compounds. These compounds may be used alone or in combination. Suitably used are primary amines including n-propylamine, isopropylamine and n-butylamine; secondary amines including diethylamine, di-n-propylamine, diisopropylamine, di-n-butylamine, piperidine, piperazine, 2-methylpiperazine, morpholine, N-methylmorpholine and N-ethylmorpholine; tertiary amines including triethylamine, tri-n-propylamine, triisopropylamine and tri-n-butylamine; amine compounds having an alcoholic hydroxyl group in the molecule including monoethanolamine, diethanolamine, triethanolamine, N-methylethanolamine, N,N-dimethylethanolamine, N-ethylethanolamine, N,N-diethylethanolamine, N-(β-aminoethyl)isopropanolamine and hydroxyethylpiperazine; and alkylated melamines including methoxymethyl-substituted products of melamine, namely, mono-, di-, tri-, tetra, penta-or hexa-methoxymethylmelamine and mixtures thereof. Also suitably used are hindered amine compounds including bis(2,2,6,6-tetramethyl-4-piperidinyl) sebacate, bis(1,2,2,6,6-pentamethyl-4-piperidinyl) sebacate, tetrakis(2,2,6,6-tetramethyl-4-piperidinyl) 1,2,3,4-butanetetracarboxylate ester, poly[[6-(1,1,3,3-tetramethylbutyl)amino-1,3,5-triazin-2,4-diyl][(2,2,6,6-tetramethyl-4-pi peridinyl)imino]hexamethylene[(2,2,6,6-tetramethyl-4-piperidinyl)imino]], 1,2,2,6,6,-pentamethylpiperidine, dimethyl succinate·1-(2-hydroxyethyl)-4-hydroxy-2,2,6,6-tetramethylpiperidine polycondensate and N,N'-bis(3-aminopropyl)ethylenediamine-2,4-bis[N-butyl-N-(1,2,2,6,6-pentamethyl-4-piperidyl)amino]-1,3,5-triazine condensate. Of these, triethanolamine is most suitably used.

The 1,3-dioxolane used as a comonomer in the present invention is commercially available or can be prepared by any production process known to a person skilled in the art, and the process is not particularly limited. In the present invention, the amount of 1,3-dioxolane added is 0.9 to 2.4 % by mass, and preferably 0.9 to 2.1 % by mass relative to the trioxane. Use of the 1,3-dioxolane in a larger amount than the upper limit would deteriorate the mechanical properties of the product, and use of the 1,3-dioxolane in a smaller amount than the lower limit would deteriorate the thermal stability of the product.

The boron trifluoride used in the present invention is preferably a coordination compound thereof. Such coordination compounds are commercially available or can be prepared by any production process known to a person skilled in the art. They include complexes of boron trifluoride with organic compounds having an oxygen atom or a sulfur atom. The organic compounds include alcohols, phenols, acids, ethers, acid anhydrides, esters, ketones, aldehydes, dialkyl compounds and sulfides. Of these, the boron trifluoride complexes are preferably etherates, and specific preferred examples include diethyl etherate and dibutyl etherate of boron trifluoride. The amount of the boron trifluoride added is generally in the range of 0.001 to 0.007 % by mole, preferably 0.002 to 0.006 % by mole, and most preferably 0.003 to 0.0055 % by mole per 1 mol of the trioxane. It is advantageous to add the boron trifluoride in an amount of more than 0.001 % by mole, because high polymerization conversion rate may be obtained. It is more advantageous to add the boron trifluoride in an amount of less than 0.007 % by mole, because enhanced thermal stability may be obtained. The boron trifluoride may be used as such or in the form of a solution. When the boron trifluoride is used in the form of a solution, the solvent may be any of, for example, aliphatic hydrocarbons such as hexane, heptane and cyclohexane; aromatic hydrocarbons such as benzene, toluene and xylene; and halogenated hydrocarbons such as methylene dichloride and ethylene dichloride.

The sterically hindered phenol used in the polymerization in the present invention is desirably any of the following sterically hindered phenols. For example, the sterically hindered phenol includes one, or two or more of dibutylhydroxytoluene, triethylene glycol-bis-3-(3-t-butyl-4-hydroxy-5-methylphenyl) propionate, pentaerythrityl-tetrakis-3-(3,5-di-t-butyl-4-hydroxyphenyl) propionate, hexamethylene bis[3-(3,5-di-t-butyl-4-hydroxyphenyl) propionate], 2,2'-methylene bis(6-t-butyl-4-methylphenol), 3,9-bis{2-[3-(3-t-butyl-4-hydroxy-5-methylphenyl)propionyloxy]-1,1-dimethylethyl}-2,4,8,10-tetraoxaspiro[5.5]undecane, N,N'-hexane-1,6-diyl bis[3-(3,5-di-t-butyl-4-hydroxyphenyl)propionamide] and 1,6-hexanediyl 3,5-bis(1,1-dimethylethyl)-4-hydroxybenzenepropionate ester. Of these, triethylene glycol-bis-3-(3-t-butyl-4-hydroxy-5-methylphenyl)propionate, pentaerythrityl-tetrakis-3-(3,5-di-t-butyl-4-hydroxyphenyl)propionate and 3,9-bis{2-[3-(3-t-butyl-4-hydroxy-5-methylphenyl)propionyloxy]-1,1-dimethylethyl}-2,4,8,10-tetraoxaspiro[5.5]undecane are suitably used, and triethylene glycol-bis-3-(3-t-butyl-4-hydroxy-5-methylphenyl)propionate is most suitably used.

In the production process of the present invention, the amount of the sterically hindered phenol added is usually 0.006 to 2.0 % by mass, preferably 0.01 to 0.5 % by mass, and more preferably 0.02 to 0.1 % by mass relative to the trioxane. When the sterically hindered phenol is used in a larger amount than the upper limit, the obtainable oxymethylene copolymer may incur adverse effects such as low molecular weight and low polymerization yield. When the sterically hindered phenol is used in a smaller amount than the lower limit, the obtainable oxymethylene copolymer would contain an increased amount of labile moieties such as formate ester structures and would incur adverse effects such as decrease in heat or hydrolysis stability.

A chain transfer agent may be used in order to control the molecular weight of the oxymethylene copolymer and thereby to control the intrinsic viscosity. The intrinsic viscosity may be controlled to 0.5 to 5 dl/g, preferably 0.7 to 3 dl/g, and more preferably 0.8 to 2 dl/g. The chain transfer agents include carboxylic acids, carboxylic acid anhydrides, esters, amides, imides, phenols and acetal compounds. In particular, phenol, 2,6-dimethylphenol, methylal and polyoxymethylene dimethoxide may be suitably used. Methylal is the most preferable. The chain transfer agent may be used as such or in the form of a solution. When the agent is used in the form of a solution, the solvent may be any of, for example, aliphatic hydrocarbons such as hexane, heptane and cyclohexane; aromatic hydrocarbons such as benzene, toluene and xylene; and halogenated hydrocarbons such as methylene dichloride and ethylene dichloride.

In the present invention, the polymerization terminator may be any of primary amines, secondary amines, tertiary amines, alkylated melamines, hindered amine compounds, trivalent organophosphorus compounds, and hydroxides of an alkali metal or alkaline earth metal. These compounds may be used alone or in combination. Suitably used are primary amines including n-propylamine, isopropylamine and n-butylamine; secondary amines including diethylamine, di-n-propylamine, diisopropylamine, di-n-butylamine, piperidine and morpholine; tertiary amines including triethylamine, tri-n-propylamine, triisopropylamine and tri-n-butylamine; and alkylated melamines including methoxymethyl-substituted products of melamine, namely, mono-, di-, tri-, tetra, penta- or hexa-methoxymethylmelamine and mixtures thereof. Also suitably used are hindered amine compounds including bis(2,2,6,6-tetramethyl-4-piperidinyl) sebacate, bis(1,2,2,6,6-pentamethyl-4-piperidinyl) sebacate, tetrakis(2,2,6,6-tetramethyl-4-piperidinyl) 1,2,3,4-butanetetracarboxylate ester, poly[[6-(1,1,3,3-tetramethylbutyl)amino-1,3,5-triazin-2,4-diyl][(2,2,6,6-tetramethyl-4-piperidinyl)imino]hexamethylene[(2,2,6,6-tetramethyl-4-piperidinyl)imino]], 1,2,2,6,6,-pentamethylpiperidine, dimethyl succinate-1-(2-hydroxyethyl)-4-hydroxy-2,2,6,6-tetramethylpiperidine polycondensate and N,N'-bis(3-aminopropyl)ethylenediamine-2,4-bis[N-butyl-N-(l,2,2,6,6-pentamethyl-4-piperidyl)amino]-1,3,5-triazine condensate.

Of these, hindered amine compounds, trivalent organophosphorus compounds and alkylated melamines are preferable in terms of the hue of the product. Most suitably be used are hindered amine compounds including bis(2,2,6,6-tetramethyl-4-piperidinyl) sebacate, bis(1,2,2,6,6-pentamethyl-4-piperidinyl) sebacate, dimethyl succinate· 1-(2-hydroxyethyl)-4-hydroxy-2,2,6,6-tetramethylpiperidine polycondensate and N,N'-bis(3-aminopropyl)ethylenediamine·2,4-bis[N-butyl-N-(1,2,2,6,6-pentamethyl-4-piperidyl)amino]-1,3,5-triazine condensate; trivalent organophosphorus compound inclufing triphenylphosphine; and alkylated melamine including hexamethoxymethylmelamine. When the polymerization terminator is used in the form of a solution or suspension, the solvent used therefor is not particularly limited, and includes water and alcohols, as well as various aliphatic or aromatic organic solvents such as acetone, methyl ethyl ketone, hexane, cyclohexane, heptane, benzene, toluene, xylene, methylene dichloride and ethylene dichloride. Of these, preferred solvents are water, alcohols and aliphatic or aromatic organic solvents such as acetone, methyl ethyl ketone, hexane, cyclohexane, heptane, benzene, toluene and xylene.

In the present invention, the polymerization time is usually 0.25 to 120 minutes, preferably 1 to 60 minutes, more preferably 1 to 30 minutes, and most preferably 2 to 15 minutes. If the polymerization time is longer than the above range, the amounts of labile moieties may be increased. If the polymerization time is shorter than the above range, the polymerization yield may be decreased.

The trioxane contains impurities such as water, formic acid, methanol and formaldehyde, which inevitably occur during the industrial production of trioxane. The total content of such impurities in the trioxane is preferably not more than 100 ppm, more preferably not more than 70 ppm, and most preferably not more than 50 ppm. In particular, the content of water is preferably not more than 50 ppm, more preferably not more than 20 ppm, and most preferably not more than 10 ppm. With respect to the 1,3-dioxolane, similarly to the trioxane, the total content of impurities present in the 1,3-dioxolane such as water, formic acid and formaldehyde is preferably not more than 1,000 ppm, more preferably not more than 200 ppm, particularly preferably not more than 100 ppm, and most preferably not more than 50 ppm. Because water decreases catalytic activity, it is preferable to adopt an approach that prevents water from coming into the polymerization apparatus from the outside. An example of such approaches is to constantly purge the polymerization apparatus with an inert gas such as nitrogen gas during the polymerization reaction.

In the present invention, the polymerization reaction may be performed by solution polymerization in the presence of an inert solvent. However, bulk polymerization in the substantial absence of solvent is preferable, because no costs are incurred for the recovery of solvents and the sterically hindered phenol exhibits larger effects. In the case where a solvent is used, the solvent includes aliphatic hydrocarbons such as hexane, heptane and cyclohexane; aromatic hydrocarbons such as benzene, toluene and xylene; and halogenated hydrocarbons such as methylene dichloride and ethylene dichloride.

In the present invention, the polymerization reaction is preferably performed with a continuous polymerization apparatus. Suitably, the reaction involves one continuous polymerizer, or two or more continuous polymerizers connected in series. For example, suitable continuous polymerizers are kneaders which have at least two horizontal rotational shafts having screw or paddle blades. Specifically, a preferred continuous polymerizer is such that the polymerizer includes a pair of shafts in a long casing which has an inner cross section formed of partly overlapped two circles, a jacket is provided around the casing, the shafts each have a large number of convex lens paddle blades fitted therein, the convex lens paddle blades are engaged with the mating paddle blades, and the blades are designed so that the inner surface of the casing and the surface of the mating convex lens paddle blades are cleaned by the movement of their tips.

In the production process of the present invention, the copolymerization is performed in the presence of the sterically hindered phenol. The sterically hindered phenol may be added as such or in the form of a solution. When the phenol is added in the form of a solution, the solvent may be any of, for example, aliphatic hydrocarbons such as hexane, heptane and cyclohexane; aromatic hydrocarbons such as benzene, toluene and xylene; and halogenated hydrocarbons such as methylene dichloride and ethylene dichloride. Alternatively, the trioxane monomer or the 1,3-dioxolane comonomer may be used as a solvent. In order to maintain the activity of the sterically hindered phenol during the polymerization reaction, it is desirable that a portion or the whole of the sterically hindered phenol be added as such or in the form of a solution at the inlet of the continuous polymerizer. Alternatively, a prescribed amount of the sterically hindered phenol may be dissolved in the trioxane before the introduction to the polymerizer.

In the production process of the present invention, the polymerization terminator is added usually after the copolymerization reaction gives a polymerization yield of 92% or more, preferably 95% or more, and more preferably 97% or more, and thereby the catalyst (boron trifluoride) is deactivated to terminate the polymerization. By allowing the polymerization to proceed to a polymerization yield of 92% or more, it becomes possible to save the energy consumption required to recover the unreacted monomers. Moreover, because the process improves the molecular chains themselves of the oxymethylene copolymer, it is hence effective for reducing the amount of formaldehyde emission and for improving the thermal stability and storage stability for any resin compositions of which the composition of additives are optimized for various applications. Thus, the present invention has a great significance in industry.

In the production of an oxymethylene copolymer by copolymerizing trioxane and 1,3-dioxolane in the presence of boron trifluoride and a sterically hindered phenol and terminating the copolymerization by bringing the resultant oxymethylene copolymer into contact with a polymerization terminator, the amount of heat-labile and hydrolysis-labile moieties including formate ester structures of the oxymethylene copolymer may be small when the copolymerization is terminated at a polymerization yield of less than 92%; however, high costs are incurred to recover the unreacted monomers. If the polymerization is terminated at a polymerization yield of 92% or more, the costs incurred for the recovery of the unreacted monomers may be reduced; however, the conventional technique cannot prevent a significant increase in the amount of heat-labile and hydrolysis-labile moieties including formate ester structures in the oxymethylene copolymer. In contrast, surprisingly, the present inventors have found that the amount of labile moieties including formate ester structures in the oxymethylene copolymer may be significantly decreased by performing the copolymerization in the presence of the specific amounts of boron trifluoride and a sterically hindered phenol until the copolymerization is terminated at a polymerization yield of 92% or more.

The copolymerization reaction is terminated by bringing the polymerization terminator into contact with the oxymethylene copolymer in the reaction system. The polymerization terminator may be used as such or in the form of a solution or suspension. The contact is desirably conducted in such a manner that a small amount of the polymerization terminator, or a solution or suspension of the polymerization terminator is added continuously to the oxymethylene copolymer while crushing the copolymer for efficient contact. If the termination of the copolymerization reaction involves a washing step in which the oxymethylene copolymer is introduced into a large amount of a solution or suspension of the polymerization terminator, the process becomes complicated by the necessity of adding a downstream solvent recovery or solvent removal step. This results in an increase in utilities and hence leads to industrial disadvantages. It is more preferable from an industrial viewpoint that the copolymerization be terminated by the addition of a small amount of the polymerization terminator to the reaction system including the oxymethylene copolymer. When the polymerization terminator is added to the reaction system, the addition is preferably followed by mixing with a mixer. As the polymerization terminator mixer for mixing the added polymerization terminator with the oxymethylene copolymer, a continuous mixer such as a single- or twin-screw or paddle mixer similar to the aforementioned continuous polymerizer may be used.

The copolymerization reaction and the copolymerization termination reaction are preferably performed consecutively. That is, a continuous polymerization apparatus in which a continuous polymerizer and a polymerization terminator mixer are connected in series is suited for the production of oxymethylene copolymers.

Because the oxymethylene copolymer may be obtained in a high yield after the termination of the copolymerization, the copolymer as it is produced may be transferred to a stabilization step. In the stabilization step, the following stabilization treatment methods (1) and (2) may be taken.

    (1) Stabilization treatment method in which the oxymethylene copolymer obtained is melted by heating to remove labile moieties.

(2) Stabilization treatment method in which the oxymethylene copolymer obtained is hydrolyzed in an aqueous medium to remove labile moieties.

After being stabilized by any of these methods, the oxymethylene copolymer may be pelletized to give a stabilized formable material.

Of the above methods, the stabilization treatment method (1) is simpler and therefore more industrially preferable than the method (2). Specifically, when the stabilization treatment method (1) is taken, the oxymethylene copolymer is preferably melt-kneaded at a temperature in the range of from the melting temperature of the copolymer to 100°C higher than the melting temperature under a pressure of 760 to 0.1 mmHg. When the stabilization treatment temperature is below the melting temperature of the oxymethylene copolymer, the labile moieties would not be sufficiently decomposed and the stabilization would not be effective. When the stabilization treatment temperature is more than 100°C higher than the melting temperature, undesirable decrease in thermal stability would be caused as the result of yellowing, thermal decomposition of the polymer backbone chains, and the simultaneous formation of labile moieties. The treatment temperature is more preferably in the range of 170 to 250°C, and most preferably 180 to 235°C. When the pressure during the stabilization treatment is higher than 760 mmHg, the decomposition gas resulting from the decomposition of labile moieties would not effectively be removed out of the system, which would not produce sufficient stabilization effect. The pressure during the stabilization treatment below 0.1 mmHg would not be preferable, because evacuating the system to such a high vacuum degree industrially disadvantageously requires an expensive apparatus and also because the molten resin tends to flow out of the suction vent to cause operation troubles. The pressure is more preferably in the range of 740 to 10 mmHg, and most preferably 400 to 50 mmHg. The treatment time may be appropriately selected in the range of 1 minute to 1 hour.

In the present invention, the apparatus used in the stabilization treatment may be a single-screw, or twin- or higher-screw vented extruder. To ensure a residence time that is required, it is advantageous to arrange two or more extruders in series. It is more advantageous to combine extruders having a high degassing effect such as ZSK extruders and ZDS extruders from Werner & Pfleiderer. Most effectively, such extruders are combined with a surface renewal mixer as will be demonstrated in Examples later.

In the stabilization treatment method (1), stabilization treatment may be performed by adding stabilizers such as antioxidants and heat stabilizers during the melt-kneading of the oxymethylene copolymer. By optimizing the chemical composition of additives so as to comply with the intended application, the oxymethylene copolymers that have enhanced thermal stability and formaldehyde emissions while maintaining excellent toughness and rigidity may be tailored to be suitable to the intended application.

The antioxidant used in the above stabilization treatment may be one, or two or more sterically hindered phenols such as triethylene glycol-bis-3-(3-t-butyl-4-hydroxy-5-methylphenyl) propionate, pentaerythrityl-tetrakis-3-(3,5-di-t-butyl-4-hydroxyphenyl) propionate, 2,2'-methylenebis(6-t-butyl-4-methylphenol), 3,9-bis {2-[3-(3-t-butyl-4-hydroxy-5-methylphenyl)propionyloxy]-1,1-dimethylethyl}-2, 4,8,10-tetraoxaspiro[5.5]undecane, N,N'-hexane-1,6-diyl bis[3-(3,5-di-t-butyl-4-hydroxyphenyl) propionamide] and 1,6-hexanediyl 3,5-bis(1,1-dimethylethyl)-4-hydroxybenzenepropionate. The heat stabilizer includes amine-substituted triazines such as melamine, methylolmelamine, benzoguanamine, cyanoguanidine and N,N-diarylmelamine, polyamides, urea derivatives, urethanes, and inorganic acid salts, hydroxides and organic acid salts of sodium, potassium, calcium, magnesium and barium.

The oxymethylene copolymers obtained by the process of the present invention described in detail hereinabove have excellent properties similarly to oxymethylene copolymers obtained by the conventional processes and may be used in similar applications.

To the oxymethylene copolymers produced by the process of the present invention, additives including colorants, nucleating agents, plasticizers, release agents, fluorescent whitening agents, antistatic agents such as polyethylene glycol and glycerol, and light stabilizers such as benzophenone compounds and hindered amine compounds may optionally be added.

EXAMPLES

Examples and Comparative Examples of the present invention will be described hereinbelow, which should not be construed as limiting the scope of the present invention. Also, the terms and measurement methods described in Examples and Comparative Examples will be explained below.

Crude oxymethylene copolymers: Crude oxymethylene copolymers refer to those which have been produced after the termination of the copolymerization but have not yet been subjected to the stabilization step.

Amount of formaldehyde emission: Pellets obtained by the stabilization step were formed into a disc having a diameter of 50 mm and a thickness of 3 mm using a forming apparatus SAV-30-30 manufactured by SANJO SEIKI CO., LTD. at a cylinder temperature of 215°C. On the next day of the forming, the disc was tested by the method described in Verband der Deutschen Automobilindustrie VDA275 (Automobile interior parts - Quantitative determination of formaldehyde emission by modified flask method) to determine the amount of formaldehyde emission.

(i) 50 ml of distilled water are added to a polyethylene container. The test piece is hung above the water in the container. Then, the container is tightly closed and held at 60°C for 3 hours.
(ii) The container is allowed to stand at room temperature for 60 minutes. Thereafter, the test piece is taken out.
(iii) The concentration of formaldehyde absorbed in the distilled water in the polyethylene container was determined by acetylacetone colorimetry with a UV spectrometer.

Residential thermal stability: As a measure of thermal stability, residential thermal stability was measured. Using pellets that have undergone the melting stabilization treatment and dried at 80°C for 4 hours, the resin in an amount corresponding to six shots was retained in an injection molding apparatus (IS75E manufactured by TOSHIBA MACHINE CO., LTD.) held at a cylinder temperature of 240°C. A strip of test piece was molded every 12 minutes, and the time (minutes) taken by the occurrence of silver marks (silver streaks) over the entire surface of the molded piece attributable to the expansion of the resin was measured.

Thermal weight loss: Pellets that have undergone the melting stabilization treatment were placed in a test tube. The inside of the tube was purged with nitrogen. Subsequently, the tube was heated at 240°C for 2 hours under a reduced pressure of 10 Torr. The weight loss (% by mass) after the heating relative to the weight before the heating was measured. The thermal weight loss was calculated using $(X - Y)/X \times 100$ wherein X was the weight before the heating and Y was the weight after the heating.

Tensile test: A test piece prepared based on ISO 3167 was tested with a tensile tester (product name: STROGRAPH APII, manufactured by TOYO SEIKI SEISAKU-SHO, LTD.) under the conditions in accordance with ISO 527 to determine the tensile strength and the tensile elongation.

Bending test: A test piece prepared based on ASTM D638 was tested in accordance with ASTM D790 to determine the flexural strength and the flexural modulus.

Polymerization yield: 20 g of a crude oxymethylene copolymer were immersed in 20 ml of acetone, filtered, washed with acetone twice and dried in vacuo at 60°C until a constant weight was reached. The mass of the copolymer was then accurately measured. The polymerization yield was determined using the following equation.

$$\text{Polymerization yield} = M1/M0 \times 100$$

M0: Mass before acetone treatment
M1: Mass after acetone treatment and drying

Examples 1 to 12 and Comparative Examples 1 to 7

Oxymethylene copolymers were produced with use of a continuous polymerization apparatus including a continuous polymerizer and a polymerization terminator mixer connected to the continuous polymerizer in series. The continuous polymerizer was such that the polymerizer included a pair of shafts in a long casing which had an inner cross section formed of partly overlapped two circles, the inner cross section having a longer diameter of 100 mm, a jacket was provided around the casing, the shafts each had a large number of convex lens paddle blades fitted therein, the convex lens paddle blades were engaged with the mating paddle blades, and the blades were designed so that the inner surface of the casing and the surface of the mating convex lens paddle blades were cleaned by the movement of their tips. The polymerization terminator mixer had a structure similar to the polymerizer and was designed so that a solution containing the polymerization terminator could be introduced into the mixer through a supply port in order to continuously mix the terminator with the polymer. To the inlet of the continuous polymerizer, trioxane (containing 0.00025 mmol of triethanolamine as a stabilizer per 1 mol of trioxane) was supplied at 95 kg/hr (1055 mol/hr). Except for Comparative Example 7, an 11 weight % 1,3-dioxolane solution of a sterically hindered phenol (triethylene glycol-bis-3-(3-t-butyl-4-hydroxy-5-methylphenyl) propionate) was fed through a line different from the trioxane feed line so that the sterically hindered phenol would be supplied in the amount shown in Table 1. Further, 1,3-dioxolane as a comonomer was continuously fed through a third line. The total amount of 1,3-dioxolane supplied from the two lines was controlled to the amount shown in Table 1. In Comparative Example 7, no sterically hindered phenols were supplied. Simultaneously, boron trifluoride diethyl etherate as a catalyst was continuously supplied in the amount shown in Table 1. Further, methylal as a molecular weight modifier was continuously supplied in an amount required to control the intrinsic viscosity of the product to 1.0 to 1.5 dl/g. The boron trifluoride diethyl etherate and the methylal were each added in the form of a benzene solution. The total amount of benzene used was not more than 1% by mass relative to the trioxane. A benzene solution containing triphenylphosphine in a molar amount two times that of the catalyst was continuously fed through the inlet of the polymerization terminator mixer to terminate the copolymerization reaction, and the crude oxymethylene copolymer was obtained from the outlet. The continuous polymerization apparatus was operated under the polymerization conditions in which the revolution velocity of the shaft in the continuous polymerizer was approximately 35 rpm, the revolution velocity of the shaft in the polymerization terminator mixer was approximately 60 rpm, the jacket temperature of the continuous polymerizer was set at 85°C, and the jacket temperature of the polymerization terminator mixer was set at 85°C. The polymerization time was about 10 minutes.

100 Parts by mass of the crude oxymethylene copolymer was mixed together with 0.025 parts by mass of melamine, 0.015 parts by mass of magnesium hydroxide, 0.1 part by mass of polyethylene glycol (molecular weight: about 20,000) and 0.3 parts by mass of triethylene glycol-bis-3-(3-t-butyl-4-hydroxy-5-methylphenyl) propionate. The mixture was fed to a vented twin-screw extruder (50 mm in diameter, L/D = 49) and was melt-kneaded under a reduced pressure of 160 mmHg at 200°C. Subsequently, the kneadate was fed to a surface renewal mixer, which included two rotational shafts each having a plurality of scraper blades displaced relative to one another so that the blades would not hit other blades during the rotation of the shafts in different directions, the blades being arranged to rotate while keeping slight gaps between their tips and the inner surface of the casing and between their tips and the other shafts. The polymer was kneaded by the rotation of the shafts while the surface of the molten polymer was constantly renewed to help the evaporation of volatile components. In this manner, the melting stabilization treatment of the copolymer was performed again under a reduced pressure of 160 mmHg at 210 to 240°C. The average residence time from the inlet of the twin-screw extruder to the outlet of the surface renewal mixer was 25 minutes. The stabilized oxymethylene copolymer was extruded through a die and was pelletized with a pelletizer.

[Table 1]

| | Amount of TOX | Amount of DOL | | Amount of catalyst | | Amount of sterically hindered phenol (A) |
|---|---|---|---|---|---|---|
| | (mol/hr) | (mol/hr) | DOL to TOX (% by mass) | (mol/hr) | Catalyst to TOX (% by mole) | A to TOX (% by mass) |
| Example 1 | 1055 | 16.2 | 1.26 | 0.0113 | 0.0011 | 0.030 |
| Example 2 | 1055 | 16.2 | 1.26 | 0.0162 | 0.0015 | 0.030 |
| Example 3 | 1055 | 16.2 | 1.26 | 0.0324 | 0.0031 | 0.030 |
| Example 4 | 1055 | 16.2 | 1.26 | 0.0486 | 0.0046 | 0.030 |
| Example 5 | 1055 | 16.2 | 1.26 | 0.0648 | 0.0061 | 0.030 |
| Example 6 | 1055 | 18.2 | 1.42 | 0.0728 | 0.0069 | 0.030 |
| Example 7 | 1055 | 12.2 | 0.95 | 0.0122 | 0.0012 | 0.030 |
| Example 8 | 1055 | 29.1 | 2.27 | 0.0291 | 0.0028 | 0.030 |
| Example 9 | 1055 | 16.2 | 1.26 | 0.0162 | 0.0015 | 0.006 |
| Example 10 | 1055 | 16.2 | 1.26 | 0.0162 | 0.0015 | 0.010 |
| Example 11 | 1055 | 16.2 | 1.26 | 0.0162 | 0.0015 | 0.500 |
| Example 12 | 1055 | 16.2 | 1.26 | 0.0162 | 0.0015 | 2.000 |
| Comparative Example 1 | 1055 | 16.2 | 1.26 | 0.0081 | 0.0008 | 0.030 |
| Comparative Example 2 | 1055 | 16.2 | 1.26 | 0.0810 | 0.0077 | 0.030 |
| Comparative Example 3 | 1055 | 8.8 | 0.69 | 0.0162 | 0.0015 | 0.030 |
| Comparative Example 4 | 1055 | 32.2 | 2.51 | 0.0322 | 0.0031 | 0.030 |
| Comparative Example 5 | 1055 | 16.2 | 1.26 | 0.0162 | 0.0015 | 0.003 |
| Comparative Example 6 | 1055 | 16.2 | 1.26 | 0.0162 | 0.0015 | 3.000 |

(continued)

| | Amount of TOX | Amount of DOL | | Amount of catalyst | | Amount of sterically hindered phenol (A) |
|---|---|---|---|---|---|---|
| | (mol/hr) | (mol/hr) | DOL to TOX (% by mass) | (mol/hr) | Catalyst to TOX (% by mole) | A to TOX (% by mass) |
| Comparative Example 7 | 1055 | 16.2 | 1.26 | 0.0162 | 0.0015 | - |

Notes: TOX = 1,3,5-trioxane
DOL = 1,3-dioxolane
Catalyst = boron trifluoride diethyl etherate
A = triethylene glycol-bis-3-(3-t-butyl-4-hydroxy-5-methylphenyl) propionate

[Table 2]

| | Properties of crude oxymethylene copolymer | | Mechanical properties | | | | Residential thermal stability | Amount of formaldehyde emission |
| | Polymerization yield (% by mass) | Thermal weight loss (% by mass) | Flexural strength (MPa) | Flexural modulus (GPa) | Tensile strength (MPa) | Tensile elongation (%) | (min) | (μg/g-POM) |
|---|---|---|---|---|---|---|---|---|
| Example 1 | 96 | 1.3 | 101 | 2.9 | 68 | 55 | 72 | 21 |
| Example 2 | 97 | 1.3 | 101 | 2.9 | 68 | 55 | 72 | 23 |
| Example 3 | 98 | 2.1 | 101 | 2.9 | 68 | 55 | 60 | 26 |
| Example 4 | 99 | 2.9 | 101 | 2.9 | 68 | 55 | 60 | 27 |
| Example 5 | 99 | 4.8 | 101 | 2.9 | 68 | 55 | 48 | 30 |
| Example 6 | 99 | 4.9 | 101 | 2.9 | 69 | 55 | 48 | 30 |
| Example 7 | 97 | 2.1 | 102 | 3.0 | 69 | 50 | 60 | 28 |
| Example 8 | 92 | 0.8 | 100 | 2.8 | 65 | 60 | 72 | 19 |
| Example 9 | 96 | 1.5 | 101 | 2.9 | 68 | 55 | 72 | 29 |
| Example 10 | 96 | 1.5 | 101 | 2.9 | 68 | 55 | 72 | 24 |
| Example 11 | 95 | 1.4 | 101 | 2.9 | 68 | 55 | 72 | 22 |
| Example 12 | 93 | 1.6 | 101 | 2.9 | 67 | 55 | 60 | 27 |
| Comparative Example 1 | 85 | 0.8 | 101 | 2.9 | 67 | 55 | 72 | 19 |
| Comparative Example 2 | 99 | 10.3 | 101 | 2.9 | 67 | 55 | 36 | 51 |
| Comparative Example 3 | 98 | 6.0 | 103 | 3.0 | 69 | 45 | 36 | 49 |
| Comparative Example 4 | 90 | 2.2 | 98 | 2.8 | 67 | 60 | 72 | 21 |
| Comparative Example 5 | 99 | 5.1 | 101 | 2.9 | 68 | 55 | 36 | 45 |

(continued)

| | Properties of crude oxymethylene copolymer | | Mechanical properties | | | | Residential thermal stability | Amount of formaldehyde emission |
|---|---|---|---|---|---|---|---|---|
| | Polymerization yield (% by mass) | Thermal weight loss (% by mass) | Flexural strength (MPa) | Flexural modulus (GPa) | Tensile strength (MPa) | Tensile elongation (%) | (min) | ($\mu$g/g-POM) |
| Comparative Example 6 | 91 | 5.5 | 101 | 2.9 | 68 | 55 | 36 | 58 |
| Comparative Example 7 | 99 | 5.1 | 101 | 2.9 | 68 | 55 | 48 | 48 |

The comparison between the properties of Examples 1 to 12 and Comparative Examples 1 to 7 shown in Table 2 reveals that the production process of the present invention can produce resin compositions having enhanced formaldehyde emissions and thermal stability in a high yield, while maintaining the rigidity and toughness.

**Claims**

1.    A process for producing an oxymethylene copolymer comprising the steps of:

performing copolymerization reaction of raw material monomers including trioxane and 0.9 to 2.4 % by mass of 1,3-dioxolane relative to the trioxane in the presence of 0.001 to 0.007 % by mole of boron trifluoride relative to the trioxane and 0.006 to 2.0 % by mass of a sterically hindered phenol relative to the trioxane; and terminating the copolymerization by adding a polymerization terminator to the reaction system at a point in time when the copolymerization reaction gives a polymerization yield of 92% or more.

2.    The process according to claim 1, wherein an amine is contained in the trioxane in a proportion of 0.00001 to 0.003 mmol per 1 mol of the trioxane.

3.    The process according to claim 1 or 2, wherein the polymerization terminator is at least one member selected from the group consisting of triphenylphosphine, hindered amine compounds and alkylated melamines.

4.    The process according to any one of claims 1 to 3, wherein the polymerization is terminated by adding a polymerization terminator to the reaction system at a point in time when the copolymerization reaction gives a polymerization yield of 97% or more.

5.    The process according to any one of claims 1 to 4, which is performed using a continuous polymerization apparatus comprising a continuous polymerizer and a polymerization terminator mixer which are connected in series.

6.    The process according to claim 5, wherein a portion or the whole of the sterically hindered phenol is added at an inlet of the continuous polymerizer.

7.    The process according to any one of claims 1 to 6, further comprising a stabilization step comprising melt-kneading the oxymethylene copolymer from the step of terminating the copolymerization at a temperature in the range of from the melting temperature of the copolymer to 100°C higher than the melting temperature under a pressure of 760 to 0.1 mmHg.

## INTERNATIONAL SEARCH REPORT

International application No.

PCT/JP2014/063731

**A. CLASSIFICATION OF SUBJECT MATTER**
*C08G2/04*(2006.01)i, *C08G2/06*(2006.01)i, *C08G2/10*(2006.01)i

According to International Patent Classification (IPC) or to both national classification and IPC

**B. FIELDS SEARCHED**

Minimum documentation searched (classification system followed by classification symbols)
C08G2/00-C08G2/38, C08L1/00-101/14

Documentation searched other than minimum documentation to the extent that such documents are included in the fields searched
Jitsuyo Shinan Koho         1922-1996   Jitsuyo Shinan Toroku Koho    1996-2014
Kokai Jitsuyo Shinan Koho   1971-2014   Toroku Jitsuyo Shinan Koho    1994-2014

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2001-329032 A  (Mitsubishi Gas Chemical Co., Inc.), 27 November 2001 (27.11.2001), claims; paragraphs [0007], [0030] & US 2002/0007044 A1    & EP 1158010 A1 & EP 1607422 A1      & DE 60127491 D & DE 60127491 T | 1-7 |
| Y | JP 03-063965 B2  (Polyplastics Co., Ltd.), 03 October 1991 (03.10.1991), claims; column 3, lines 15 to 19, 33 to 38; column 4, lines 3 to 7; column 5, lines 18 to 21, 34 to 38 & US 4579935 A1          & EP 128739 A1 & DE 3479125 D          & AU 2913584 A | 1-7 |

☐ Further documents are listed in the continuation of Box C.      ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered   to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 18 August, 2014 (18.08.14) | 02 September, 2014 (02.09.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

**EP 3 006 477 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H8325341 A
- JP H363965 B
- JP H7242652 A
- JP H11269165 A
- WO 9829483 A1
- JP 2001329032 A